# EUROPÄISCHE PATENTANMELDUNG

(11) **EP 2 380 429 A1**
(43) Veröffentlichungstag der Anmeldung: **26.10.2011**
(21) Anmeldenummer: 10004402.3
(22) Anmeldetag: 26.04.2010
(51) Int. Cl.: A01D 45/00

(54) **Stecheinheit für Spargelerntesysteme**

(71) Anmelder: Phoenix Technology Ltd., Warwick CV34 8EW (GB)
(72) Erfinder: Die Erfindernennung liegt noch nicht vor
(74) Vertreter: Lewandowski, Axel

(57) **Zusammenfassung**

Die Spargelstecheinheit ist so aufgebaut, dass in einem Führungsrohr, mit einer möglichst geringen Ringfläche, welches über die Spargelstange in den Boden eingeführt wird, ein flexibler Blechstreifen mittels Führungsbahnen im Führungsrohr nach unten geleitet wird, der am unteren Rohrende über eine Umlenkung einen horizontalen Schnitt durchführt.

Die Stecheinheit eines Spargelernters ist so anzugeben, dass eine möglichst hohe Erntequalität durch ein automatisiertes Stechen der Spargelstangen aufweist und mit einer möglichst geringen Grundfläche einen möglichst geringen Kraftaufwand beim Eintauchen in den Boden und dadurch auch eine möglichst geringe Verdichtung des Erdreichs zu erreichen, um somit die Arbeitsbedingungen, Produktivität und die Qualität entscheidend zu verbessern.

## Beschreibung

Die Erfindung betrifft eine "Stecheinheit eines Spargelernters".

Aus dem Stand der Technik sind unterschiedliche Bauformen von Spargelerntegeräten bekannt.

Spargelerntegeräte dienen der Verbesserung der Spargelernte. Spargel wird derzeit hauptsächlich von Hand geerntet. Weißer Spargel wird in trapezförmig aufgeschütteten Reihen angepflanzt. Wenn der Spargel die Oberfläche durchbricht wird er gestochen. Hierzu wird er freigelegt und mit einer gebogenen Klinge abgeschnitten, gestochen. Der Nutzen der Maschinen liegt darin, den mühsamen Ernteprozess, der zu meist in gebückter Haltung durchgeführt wird, zu erleichtern oder ihn sogar teilweise zu automatisieren und somit die Produktivität zu steigern sowie die Erntequalität zu verbessern. Es gibt grundsätzlich zwei verschiedene Arten von Maschinen.

Die eine Art ist ein fahrbarer Arbeitsplatz. Die Person, die den Spargel erntet, sitzt in einem selbstfahrenden Wagen nahe der trapezförmig aufgeschütteten Reihen. Die Arbeitsposition des Bedieners wird verbessert, jedoch wird das Stechen des Spargels weiterhin manuell durchgeführt. Die Qualität und die Quantität des Erntens ist daher weiterhin von den persönlichen Fähigkeiten des Bedieners abhängig.

Die zweite Variante ist ein Gerät zum Stechen des Spargels. Geräte dieser Art sind unter anderem aus DE 20 2004 000 431 U1 bekannt. Wenn die Spargelstange den Boden durchbricht und dadurch erkannt wird, kann sie geerntet werden. Spargelerntegeräte erleichtern die Ernte dadurch, dass ein Rohr über Spargelstange geschoben wird, an dessen unterem Ende eine abgedeckte Klinge ist. Durch eine Drehbewegung wird die Klinge am Rohr-ende entlang geschwenkt und schneidet so die Spargelstange ab. Durch das Erntegerät wird vermieden, dass der Spargel zunächst freigelegt werden muss und der Schnitt in einer mechanisch definierten Schnittbewegung abgeschnitten wird. Die Beschädigung des Spargels wird dadurch minimiert. Der Nachteil dieser Erntegeräte ist, dass durch die große Grundfläche, die durch die ringförmige Klinge bestimmt wird, das Erdreich stark verdichtet wird und sehr große Kräfte benötigt werden, um das Spargelerntegerät in den Boden zu treiben.

Ausgehend von diesem Stand der Technik liegt der Erfindung insoweit die Aufgabe zugrunde, eine Stecheinheit eines Spargelernters anzugeben, das eine möglichst hohe Erntequalität durch ein automatisiertes Stechen der Spargelstangen aufweist und mit einer möglichst geringen Grundfläche einen möglichst geringen Kraftaufwand beim Eintauchen in den Boden und dadurch auch eine möglichst geringe Verdichtung des Erdreichs zu erreichen, um somit die Arbeitsbedingungen, Produktivität und die Qualität entscheidend zu verbessern.

Diese Aufgabe wird dadurch gelöst, dass in einem Führungsrohr, mit einer möglichst geringen Ringfläche, welches über die Spargelstange in den Boden eingeführt wird, ein flexibler Blechstreifen mittels Führungsbahnen im Führungsrohr nach unten geleitet wird, der am unteren Rohrende über eine Umlenkung einen horizontalen Schnitt durchführt.

Weitere vorteilhafte Ausführungsformen sind in den Unteransprüchen gekennzeichnet.

Die erfindungsgemäße Stecheinheit eines Spargelernters wird nun anhand von bevorzugten Ausführungsbeispielen mit Hilfe der beigefügten Zeichnungen näher erläutert. Es zeigen:
- Fig. 1: eine perspektivische Ansicht einer Stecheinheit eines Spargelernters,
- Fig. 2: eine perspektivische Detailansicht einer Stecheinheit eines Spargelernters,
- Fig. 3: eine perspektivische Detailansicht einer Stecheinheit eines Spargelernters,
- Fig. 4: eine perspektivische Detailansicht einer Stecheinheit eines Spargelernters,
- Fig. 5: eine perspektivische Ansicht einer Stecheinheit eines Spargelernters mit zwei Schneidblechen,
- Fig. 6: eine perspektivische Detailansicht einer Stecheinheit eines Spargelernters mit zwei Schneidblechen,
- Fig. 7: eine perspektivische Ansicht einer Stecheinheit eines Spargelernters mit zwei Schneidblechen,
- Fig. 8: eine perspektivische Ansicht einer motorbetriebenen Stecheinheit eines Spargelernters.

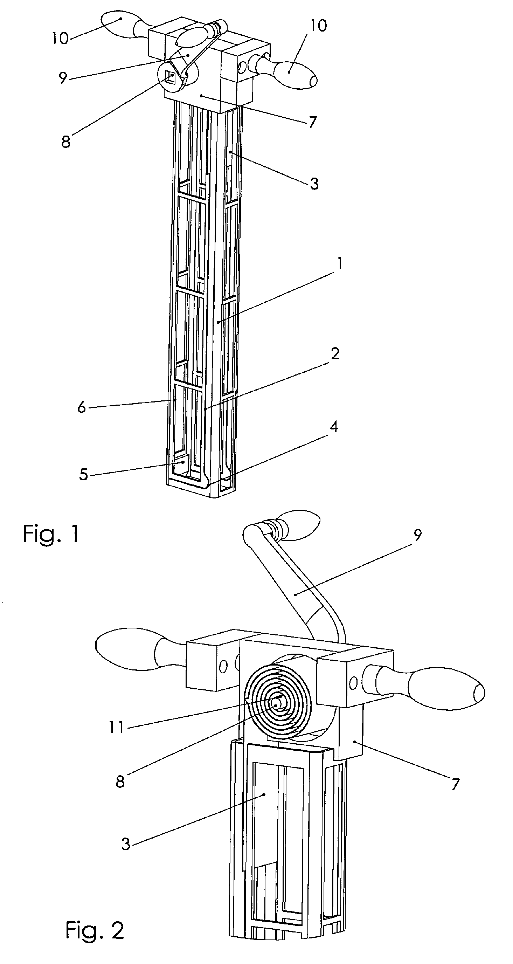

Die Fig. 1 zeigt eine perspektivische Ansicht einer Stecheinheit eines Spargelernters. In einem erfindungsgemäßen Führungsrohr (1) ist eine Führungsnut (2) eingearbeitet. In der Führungsnut (2) wird ein Schneidblech (3) geführt. Dieses Schneidblech wird durch einen Antrieb nach unten geleitet. Am Rohrende wird das Schneidblech mittels einer Umlenkung (4) in eine Horizontale Schnittbewegung umgelenkt. Die Schnittbewegung wird durch ein Anschlagstück (5) begrenzt. Dieses Anschlagstück ist besonders vorteilhaft aus einem weichen Material um einen Verschleiß der Schnittfläche zu reduzieren. Eine besonders vorteilhafte Version des Führungsrohrs weist zusätzliche Öffnungen (6) in der Mantelfläche des Rohrs auf, durch die beim Herausziehen der Stecheinheit die eingeschlossene Erde entweichen kann. In einer besonders vorteilhaften Ausführung befindet sich am oberen Ende des Führungsrohrs (1) eine Aufwickelvorrichtung (7). In dieser Aufwickelvorrichtung (7) wird der Blechstreifen (3) auf einer Welle (8) aufgewickelt. Hierdurch kann der Blechstreifen (3) platzsparend aufgenommen werden und kann ebenso direkt über eine Kurbel (9) und die Welle (8) vor und zurück bewegt werden. An der Aufwickelvorrichtung können zusätzliche Handgriffe (10) angebracht werden, die das Eintreiben und das Herausziehen der Stecheinheit in und aus den Boden erleichtern. Mit der erfindungsgemäßen Ausführung einer Stecheinheit eines Spargelernters wird der Spargel wie folgt gestochen. Die Stecheinheit wird über dem zu erntenden Spargel positioniert. Mittels der Handgriffe (10) wird die Einheit in den Boden eingeführt, bis eine ausreichende Tiefe erreicht ist. Dann wird das Schneidblech (3) mittels der Kurbel (9) nach unten bewegt. Am Rohrende wird die vertikale Bewegung des Schneidblechs (3) über die Umlenkung (4) in eine horizontale Schnittbewegung umgeleitet. Wenn das Schneidblech (3) am Anschlagstück (5) ansteht ist der Spargel abgeschnitten und die Einheit kann über die Handgriffe (10) aus dem Boden gezogen werden. Beim Herausziehen steht die Spargelstange auf dem Schnittblech und wird mit herausgehoben. Die eingeschlossene Erde kann über die Öffnungen (6) aus dem Rohr entweichen und füllt das freigegebene Loch im Boden. Durch das zurückkurbeln des Schnittblechs (3) wird der Spargel freigegeben und kann abgelegt werden.

Die Fig. 2 zeigt eine perspektivische Detailansicht einer Stecheinheit eines Spargelernters. Die Ansicht zeigt die Aufwickelvorrichtung (7) der besonders vorteilhaften erfindungsgemäßen Stecheinheit. Das Schneidblech (3) der Stecheinheit wird in dieser Variante auf der Welle (8) aufgewickelt. In der Welle (8) ist ein Längsschlitz (11). Durch diesen Schlitz (11) wird das Schneidblech (3) gesteckt. Die Welle (8) wird in dieser Variante mit einer Kurbel (9) von Hand gedreht. Durch die Drehung der Welle (8) wickelt sich das Blech spiralförmig auf. Bei Ändern der Drehrichtung wickelt sich das Schneidblech (3) ab. Der Antrieb dieser Variante erfolgt mittels einer Handkurbel. Jeder andere Antrieb zur Auf- und Abwärtsbewegung des Schneidblechs (3) ist vorstellbar.

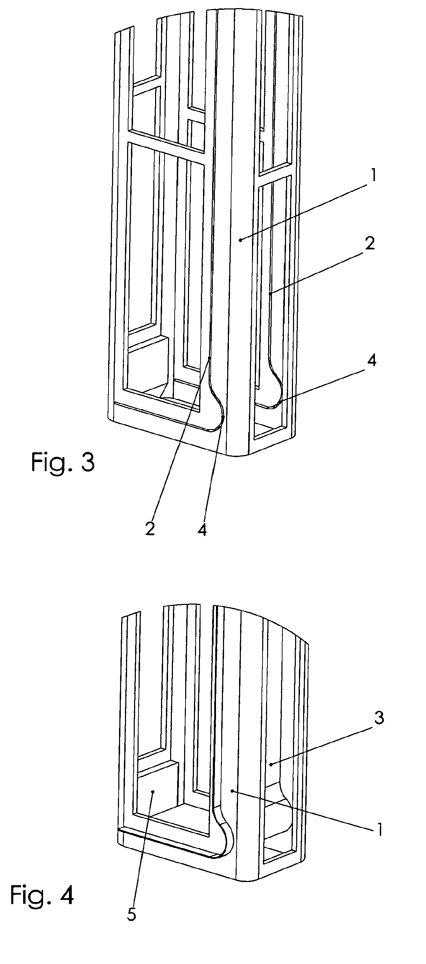

Die Fig. 3 zeigt eine perspektivische Detailansicht einer Stecheinheit eines Spargelernters. Die Ansicht zeigt das untere Ende des Führungsrohrs (1). Im Führungsrohr (1) sind die beiden Führungsnuten (2) eingearbeitet. Am Ende des senkrechten Teils der Führungsnut (2) sind die beiden Umlenkungen (4). Hier wird das Schneidblech (3) in eine horizontale Schneidrichtung ungelenkt. Das Schneidblech (3) kann nun die Senkrechtstehende Spargelstange abtrennen.

Die Fig. 4 zeigt eine perspektivische Detailansicht einer Stecheinheit eines Spargelernters. Die Ansicht zeigt ebenfalls das untere Ende des Führungsrohrs (1). Jedoch ist das Schneidblech (3) bis an die Anschlagsplatte (5) vorgeschoben. Der Spargel wäre nun abgetrennt und würde auf dem waagerechten Teil des Schneidblechs (3) stehen.

Die Fig. 4 zeigt eine perspektivische Ansicht einer Stecheinheit eines Spargelernters mit zwei Schneidblechen. Diese weiter vorteilhafte Bauform der Stecheinheit hat im Führungsrohr (12) zwei Führungsnuten (2) eingearbeitet. Es können somit zwei Schneidbleche (13) nach unten geführt werden. Werden die beiden Schneidbleche (13) gleichmäßig nach unten geleitet treffen sie in der Mitte der unteren Öffnung des Führungsrohrs (12) aufeinander. Der Spargel wird somit mittig geschnitten. Diese Anordnung der Schneidbleche (13) bietet den Vorteil, das die Stecheinheit mittig über die zuerntende Spargelstange geschoben werden kann. Die Positionierung ist somit vereinfacht. Ebenso vorteilhaft ist, das der Spargel von beiden Seiten gleichzeitig geschnitten wird. Es können somit eventuelle Druckstellen durch die Anschlagplatte (5) vermieden werden. Am oberen Ende des Führungsrohrs (12) ist ebenfalls eine Aufwickeleinrichtung (14) zur Aufnahme der beiden Schneidbleche (3).

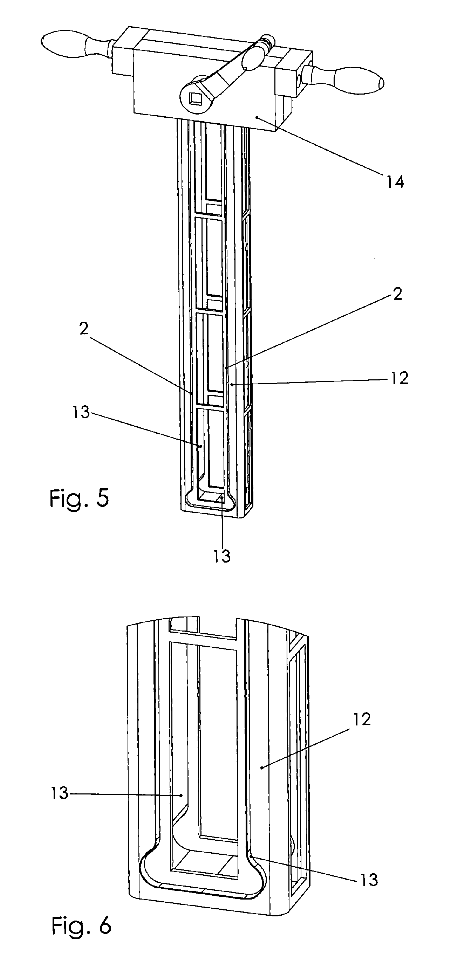

Die Fig. 6 zeigt eine perspektivische Detailansicht einer Stecheinheit eines Spargelernters mit zwei Schneidblechen. Diese Ansicht verdeutlicht das untere Rohrende des Führungsrohrs (12) der in Fig. 5 beschriebenen Stecheinheit. Werden die beiden Schneidbleche (13) synchron nach unten geleitet treffen sie in der Mitte der unteren Öffnung des Führungsrohrs (12) aufeinander.

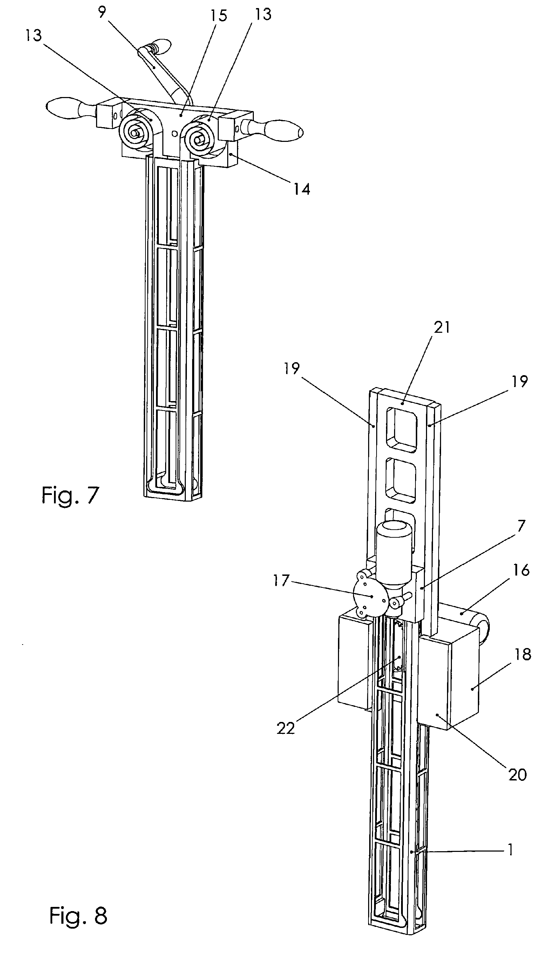

Die Fig. 7 zeigt eine perspektivische Ansicht einer Stecheinheit eines Spargelernters mit zwei Schneidblechen. Zur näheren Beschreibung der Aufwickeleinrichtung (14) ist eine Hälfte der Aufwickeleinrichtung (14) ausgeblendet. Im Gegensatz zur Aufwickeleinrichtung (7) besteht die in dieser Ansicht beschriebene Einrichtung (14) aus einer zusätzlichen Getriebeplatte (15). In dieser Getriebeplatte (15) ist ein Stirnradgetriebe eingebaut, welches ermöglicht, mit einer Kurbel (9) beide Schneidbleche (13) anzutreiben.

Die Fig. 8 zeigt eine perspektivische Ansicht einer motorbetriebenen Stecheinheit eines Spargelernters. Die Abbildung zeigt ein zur ersten Abbildung identische Stecheinheit, jedoch sind die beiden manuellen Antriebe für das Eintauchen der Stecheinheit in den Boden und für das Schneiden der Spargelstange durch elektrische Antriebe (16/17) ersetzt. Für das Eintauchen der Stecheinheit in den Boden ist eine zusätzliche Antriebseinheit 18 eingebracht. Diese Antriebseinheit (18) ist idealerweise an einem verfahrbaren Rahmen befestigt. Sie dient zunächst der Aufnahme des Antriebsmotors (16). Ebenso wird die Aufwärts- und Abwärtsbewegung der Stecheinheit geführt. Hierzu laufen die am Führungsrohr (1) befestigten Zahnstangen (19) zwischen der Antriebseinheit (18) und Deckel (20). Die beiden Zahnstangen (19) werden durch das Distanzstück (21) gestützt. In der Antriebseinheit (18) ist des weiteren ein Stirnradgetriebe (22) eingebaut. Das Stirnradgetriebe (22) überträgt die Rotationsbewegung des Antriebmotors (16) auf die Zahnstangen (19). Die Stecheinheit kann somit aufwärts und abwärts bewegt werden. An der Aufwickeleinheit (7) ist ebenfalls ein elektrischer Antrieb (17) angebaut. Mit Hilfe des Antriebmotors (17) wird die Welle (8) angetrieben und wickelt so das Schneidblech (3) auf der Welle auf oder durch Ändern der Drehrichtung des Motors (17) ab.

## Patentansprüche

1. Eine Stecheinheit Spargelernter **dadurch gekennzeichnet, dass** in einem Führungsrohr (1), welches über den zu erntenden Spargel in das Erdreich eingeführt wird, mindestens eine Führungsnut (2) eingearbeitet ist, in der ein idealerweise flexibles Schneidblech (3) geleitet wird, das mittels der Führungsnut am unteren Rohrende des Führungsrohrs (1) eine möglichst waagerechte Schnittbewegung ausführt, um den Spargel im Erdreich abzuschneiden.

2. Eine Stecheinheit Spargelernter nach Anspruch 1 **dadurch gekennzeichnet, dass** das Führungsrohr (1) Öffnungen (6) aufweist, durch die das herausgetrennte Erdreich entweichen kann.

3. Eine Stecheinheit Spargelernter nach einem der vorgehenden Ansprüche, **dadurch gekennzeichnet, dass** das Schneidblech (3) in einer Aufwickeleinheit (7) aufgerollt wird.

4. Eine Stecheinheit Spargelernter nach einem der vorgehenden Ansprüche, **dadurch gekennzeichnet, dass** zwei Schneidbleche (3) in einer Aufwickeleinheit (14) aufgerollt werden.

5. Eine Stecheinheit Spargelernter nach Ansprüchen 3 und 4, **dadurch gekennzeichnet, dass** das Aufwickeln und Abwickeln des Schneidblechs (3) mittels einer Kurbel erfolgt.

6. Eine Stecheinheit Spargelernter nach Ansprüchen 3 und 4, **dadurch gekennzeichnet, dass** das Aufwickeln und Abwickeln des Schneidblechs (3) mittels eines beliebigen Antriebs erfolgt.

7. Eine Stecheinheit Spargelernter nach einem der vorgehenden Ansprüche, **dadurch gekennzeichnet, dass** das Eintauchen und das Herausziehen der Stecheinheit aus dem Erdreich mittels eines elektrischen Antriebs (16) erfolgt.

8. Eine Stecheinheit Spargelernter nach einem der Ansprüche 1 bis 6, **dadurch gekennzeichnet, dass** das Eintauchen und das Herausziehen der Stecheinheit aus dem Erdreich mittels eines beliebigen Antriebs erfolgt.

9. Eine Stecheinheit Spargelernter nach Ansprüchen 3 und 4, **dadurch gekennzeichnet, dass** die Aufwärts und Abwärtsbewegung des Schneidblechs (3) mittels eines beliebigen Antriebs erfolgt.
